Europäisches Patentamt

European Patent Office

Office européen des brevets

(11) Numéro de publication : **0 410 515 B1**

# (12) FASCICULE DE BREVET EUROPEEN

(45) Date de publication du fascicule du brevet :
**11.01.95 Bulletin 95/02**

(51) Int. Cl.$^6$ : **G06F 5/01**

(21) Numéro de dépôt : **90201960.3**

(22) Date de dépôt : **19.07.90**

(54) **Procédé de rotation d'un mot constitué de "p" éléments binaires et dispositif dans lequel ledit procédé est mis en oeuvre.**

(30) Priorité : **25.07.89 FR 8910002**
**19.01.90 FR 9000621**

(43) Date de publication de la demande :
**30.01.91 Bulletin 91/05**

(45) Mention de la délivrance du brevet :
**11.01.95 Bulletin 95/02**

(84) Etats contractants désignés :
**DE ES FR GB**

(56) Documents cités :
**PHILIPS JOURNAL OF RESEARCH, vol. 42, no. 4, 23 novembre 1987, pages 451-479, Eindhoven, NL; C. RONSE: "On rotators and shifters"**
**IBM TECHNICAL DISCLOSURE BULLETIN, vol. 29, no. 12, mai 1987, pages 5594-5595, New York, US; "Software data encryption standard"**

(73) Titulaire : **TRT TELECOMMUNICATIONS RADIOELECTRIQUES ET TELEPHONIQUES**
**88 rue Brillat Savarin**
**F-75013 Paris (FR)**

(84) **FR**
Titulaire : **Philips Electronics N.V.**
**Groenewoudseweg 1**
**NL-5621 BA Eindhoven (NL)**

(84) **DE ES GB**

(72) Inventeur : **Leterrier, Benoit**
**Société Civile S.P.I.D.,**
**156 boulevard Haussmann**
**F-75008 Paris (FR)**
Inventeur : **Delaporte, Xavier**
**Société Civile S.P.I.D.,**
**156 boulevard Haussmann**
**F-75008 Paris (FR)**

(74) Mandataire : **Chaffraix, Jean et al**
**Société Civile S.P.I.D.**
**156, Boulevard Haussmann**
**F-75008 Paris (FR)**

EP 0 410 515 B1

## Description

La présente invention concerne un procédé de rotation d'un mot constitué de "p" éléments binaires ($b_0$ à $b_{p-1}$) disposé depuis une position P(i) jusqu'à une position P(i+p-1) dans un format global prévu pour contenir (p+n) éléments binaires disposés selon les positions P(1) à P(p+n), format global constitué de k format(s) élémentaire(s) FE(j), (j = 1... k) formé(s) de x éléments binaires kx = p+n.

Un tel procédé trouve d'importantes applications notamment pour effectuer des permutations circulaires d'éléments binaires d'une clef de codage à utiliser à l'intérieur d'une carte à microcircuit. L'ouvrage intitulé : "Les cartes à microcircuit" de F.GUEZ et al. édité en France aux Editions Manon, donne toutes explications pour ce genre de codage. On trouvera aussi dans l'ouvrage "Security for Computer Networks" de D.W. Davies et W.L. Price, édité par John WILLEY & SONS des renseignements plus précis concernant les algorithmes employés dans ces cartes à microcircuits.

On est confronté, avec ce genre de carte, au problème du manque d'emplacement offert par le microcircuit. La place pour le stockage des informations de programmation reste réduite, aussi il importe que les divers sous-programmes ou routines faisant partie de ces informations soient de la plus petite taille possible et soient utilisés le plus souvent possible.

Ce problème se pose avec plus d'acuité lorsqu'on doit traiter la clé de codage formée de deux demi-clés de 28 éléments binaires chacune alors que les messages à crypter ou à décrypter sont séparés en deux blocs de 32 éléments binaires chacun. Il existe donc une disparité entre le format de ces blocs 32 éléments binaires et des demi-clés 28 éléments binaires, qui peuvent s'étaler dans le format de 32 éléments binaires. Ce format de 32 éléments binaires est considéré comme un format global qui est constitué de formats élémentaires de 8 éléments binaires chacun, par exemple. On se rend compte alors qu'une opération de rotation sur ces demi-clés à l'intérieur du format global peut être gaspilleuse d'informations de programmation.

Une méthode pour effectuer la rotation d'un mot constitué de "p" éléments binaires disposé depuis une position P(i) jusqu'à une position P(i+p-1) dans un format global prévu pour contenir (p+n) éléments binaires disposés selon les positions P(1) à P(p+n) se trouve décrit dans l'article de la publication PHILIPS JOURNAL RESEARCH, Volume 42, Numéro 4 du 23 Novembre 1987, pages 451-479 au paragraphe 3.

Le but de la présente invention est de proposer un procédé du genre mentionné dans le préambule qui optimise la place pour le stockage des informations de programmation.

Pour cela, le procédé selon l'invention tel que défini dans la revendication 1 est remarquable en ce qu'il est effectué au moyen d'un microprocesseur disposant d'une instruction du type test d'un élément binaire dans le format élémentaire avec transfert de sa valeur dans un registre de report, en ce qu'il implique une phase de préparation qui consiste :

- à recopier dans les positions P(1) à P(i-1) les éléments binaires disposés dans les positions P(p+1) à P(i+p-1) et dans les positions P(i+p) à P(p+n) les éléments binaires disposés dans les positions P(i) à P(n) si 0<i-1<n,
- à recopier dans les positions P(1) à P(n) les éléments binaires disposés dans les positions P(p+1) à P(p+n) si i-1 = n,
- à recopier dans les positions P(p+1) à P(p+n) les éléments binaires disposés dans les positions P(1) à P(n) si i = 1, et en ce que la phase de rotation proprement dite consiste :
- à transférer dans le registre de report au moyen de ladite instruction de report l'élément binaire situé à la position P(n+1) pour une rotation dans un premier sens et à effectuer successivement une rotation dans ce premier sens de tous les formats éléments FE(k), FE(k-1),... FE(1),
- à transférer dans le registre de report au moyen de ladite instruction de report l'élément binaire situé à la position P(p+n-i+1) pour une rotation dans un second sens et à effectuer successivement une rotation dans ce second sens de chaque format élément FE(1), FE(2), ... FE(k).

La présente invention concerne aussi un dispositif défini en revendication 3 dans lequel ledit procédé est mis en oeuvre.

La description suivante, accompagnée des dessins annexés, le tout donné à titre d'exemple non limitatif, fera bien comprendre comment l'invention peut être réalisée.

La figure 1 montre un dispositif conforme à l'invention.

La figure 2 explicite les instructions impliquées par le procédé de l'invention.

La figure 3 explicite la constitution d'un format élémentaire.

La figure 4 montre la disposition d'un mot à "p" éléments binaires placé dans un format global et le résultat de la phase préparatoire.

La figure 5 explicite la rotation à gauche du mot à traiter.

La figure 6 explicite la rotation à droite du mot à traiter.

La figure 7 montre la permutation effectuée en combinaison avec la phase préparatoire dans le cadre de la carte à microcircuit.

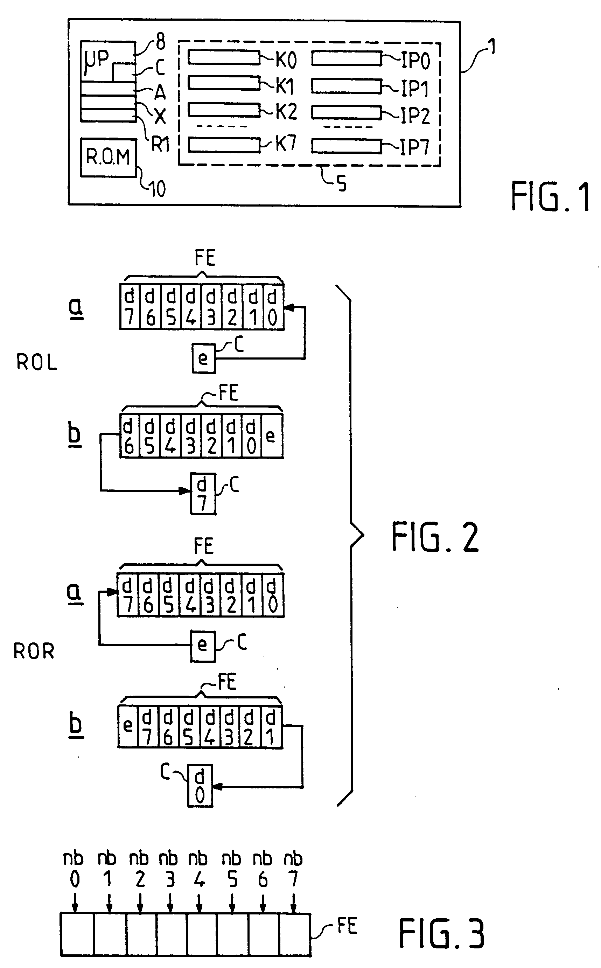

La référence 1 à la figure 1 montre le dispositif dans lequel le procédé est mis en oeuvre, dispositif qui peut être une carte à microcircuit. Le mot à traiter est une clef de codage formée de deux demi-clés de 28 éléments binaires chacune, la première demi-clé est contenue dans quatre registres à huit éléments binaires K0, K1, K2, K3 et la deuxième dans les registres K4... K7 faisant partie d'une mémoire vive 5. Une unité de traitement 8 opérant selon des instructions provenant d'une mémoire morte 10 effectue différents traitements notamment sur les données contenues dans les registres K0 à K7 de 8 éléments binaires chacun.

Sur la figure 1 on a aussi représenté les registres IP0 à IP7, de 8 éléments binaires chacun aussi, à partir desquels les demi-clés sont traitées pour subir une étape de permutation qui sera explicitée par la suite. On a également noté par C le registre de report faisant partir de l'unité de traitement 8 et par A, X, R1 différents autres registres.

Pour effectuer lesdites rotations sur ces clés, on utilise notamment les instructions de rotation opérant sur un formant élémentaire FE de 8 éléments binaires. Les opérations de ces instructions sont schématisées à la figure 2. Sur cette figure on a représenté les deux rotations gauche et droite envisageables ROL et ROR. En ce qui concerne l'instruction ROL :

- en $\underline{a}$ on a représenté un mot $d_7 \ldots d_0$ contenu dans un format élémentaire de travail FE et un élément binaire "e" contenu dans un registre de report C avant l'exécution de l'instruction ROL,
- en $\underline{b}$ l'instruction a été exécutée et le mot contenu dans le format FE est maintenant $d_6\, d_5\, d_4\, d_3\, d_2\, d_1\, d_0$ e et le registre de report contient $d_7$.

En ce qui concerne l'instruction ROR :

les sens sont inversés ; de la position de départ $d_7 \ldots d_0$ on obtient e $d_7\, d_6\, d_5\, d_4\, d_3\, d_2\, d_1$ avec $d_0$ contenu dans le registre C.

Selon l'invention, on choisit comme unité de traitement 8 un microprocesseur qui comporte une instruction, du type BRSET ; par exemple le microprocesseur 6805 fabriqué par MOTOROLA comporte une telle instruction. Cette instruction permet de tester n'importe quel élément binaire $nb_0$ à $nb_7$ contenu dans un registre de format élémentaire FE (figure 3) et cette valeur est transférée dans le registre C.

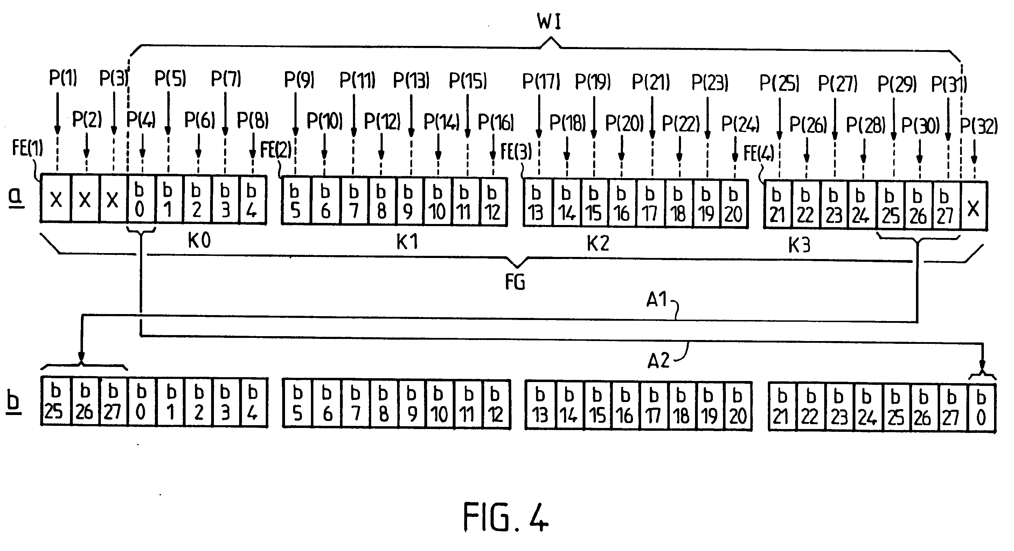

Il est alors possible de voir comment le procédé de l'invention peut être mis en oeuvre. Pour cela, on se reporte à la figure 4 qui montre comment est disposé le mot à traiter WI dans un format global FG formé de quatre formats élémentaires FE(1), FE(2), FE(3), FE(4) du type explicité à la figure 3, correspondant au format de travail du microprocesseur précité.

Sur la figure 4, à la ligne $\underline{a}$ on a représenté par WI la clef initiale composée des éléments binaires $b_0$-$b_{27}$ (p =28) ; ce mot est codé dans les registres précités K0-K3 à huit éléments binaires, ce qui correspond au format élémentaire de travail du microprocesseur précité. Les quatre registres K0-K3 correspondent donc à un format global FG de 32 éléments binaires (p+n =32) répartis dans 32 positions de ce format repérées par P(1) à P(32) de gauche à droite. Le mot WI occupe, par exemple, les positions P(i) à P(i+p-1) avec i = 4, $i+p^{-1} = 31$.

Le procédé de l'invention prévoit une phase de préparation qui consiste à renvoyer dans des positions du format global des éléments binaires du mot à traiter. Ainsi dans les positions P(1) à P(3) situées à gauche du format global on recopie les éléments binaires du mot WI situés dans les positions P(29) à P(31) c'est-à-dire que les éléments binaires $b_{25}$, $b_{26}$, $b_{27}$ se retrouvent aux positions P(1), P(2) et P(3) conformément à ce qui est indiqué par la flèche A1. D'une manière similaire, l'élément binaire $b_0$ situé en P(4) occupe la position P(32) (comme montré par la flèche A2).

La ligne $\underline{b}$ de la figure 4 montre la répartition des éléments binaires après cette phase préparatoire.

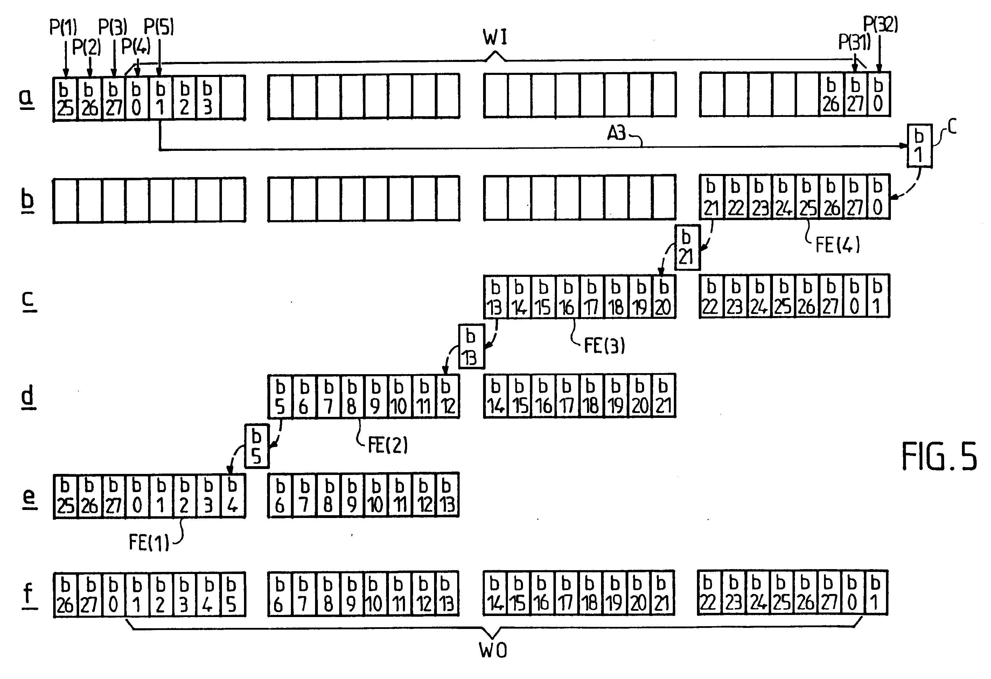

La figure 5 illustre la manière dont est exécutée une rotation à gauche. Pour cela, on commence à tester l'élément binaire qui suit ceux qui ont été recopiés dans la partie droite c'est-à-dire que, dans cet exemple, on teste l'élément binaire $b_1$ situé à la position P(5). Du fait de ce test, la valeur de cet élément binaire est enregistrée dans le registre C (voir flèche A3). Il est facile maintenant de comprendre en partant de la ligne $\underline{b}$, en effectuant quatre rotations ROL et en examinant les lignes $\underline{c}$, $\underline{d}$, $\underline{e}$ et $\underline{f}$ comment la rotation du mot est obtenue. Il faut remarquer que le mot W0 de la ligne $\underline{f}$ résultant de l'opération, peut subir des rotations à droite et à gauche sans nécessiter de phase préparatoire.

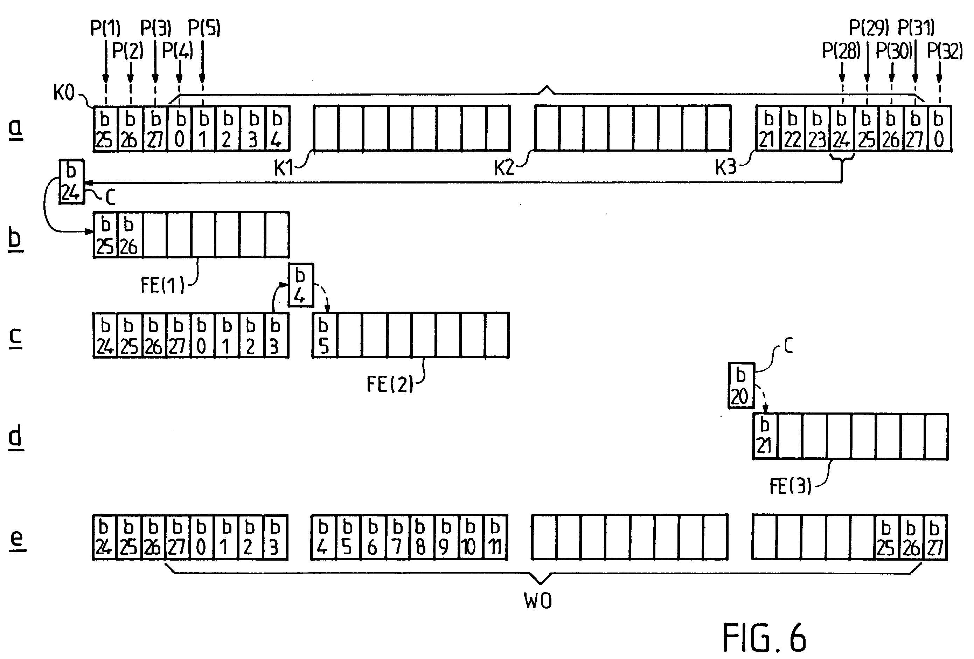

La figure 6 indique une rotation à droite. On admet ici que la phase préparatoire a déjà été effectuée et que le mot à traiter occupe toujours les positions P(4) à P(31). Ici on teste l'élément binaire $b_{24}$ placé à la position P(28), sa valeur est recopiée dans le registre C de sorte qu'on peut exécuter l'opération ROR aux différents registres K0 ligne $\underline{c}$,... K3 ligne $\underline{d}$, le mot W0 est indiqué à la ligne $\underline{e}$.

Les différentes phases du procédé de l'invention sont maintenant expliquées selon les instructions du microprocesseur 6805 précédemment cité.

3

### 1) Phase préparatoire

```
                                         Commentaires

AND  K3  1 1 1 1 1 1 1 0  }  la position P(32) (registre K3)
STA K3                       est mise à zéro
AND  KO  0 0 0 1 1 1 1 1  }  les positions P(1), P(2), P(3)
STA KO           .           (registre KO) sont mises à zéro
AND  KO  0 0 0 1 0 0 0       l'élément binaire $b_0$ est isolé
ROR  A
ROR  A
ROR  A                       l'élément binaire se retrouve à
                             droite dans l'accumulateur A
EOX  K3
STA  K3                      l'élément binaire $b_0$ occupe la po-
                             sition P(32)
AND  K3  0 0 0 1 1 1 0       les éléments binaires $b_{25}$, $b_{26}$,
                             $b_{27}$ sont isolés
ROL A
ROL A
ROL A                        les éléments binaires $b_{25}$, $b_{26}$,
                             $b_{27}$ sont placés à gauche
EOX  KO
STA  KO                      les éléments binaires $b_{25}$, $b_{26}$,
                             $b_{27}$ occupent les positionsP(1),
                             P(2), P(3).
```

### 2) Rotation à gauche

```
                                         Commentaires

      BRSET 4, KO, "lblG"     on teste l'élément binaire à la
                             position P(5), quelle que soit sa
                             valeur, on exécute l'instruction
                             situé à l'étiquette "lblG"

"lblG" ROL K3
       ROL K2
       ROL K1
       ROL KO
```

3) <u>Rotation à droite</u>

```
    BRSET 3, K3, "lblR"        on teste l'élément binaire situé à
"lblR" ROR K0                  la position P(28).
       ROR K1
       ROR K2
       ROR K3
```

Il est bien évident que le mot à traiter peur occuper n'importe quelle place dans le format global :
- soit être centré c'est-à-dire occuper les positions P(3) à P(30),
- soit être situé en butée à l'une des extrémités par exemple occuper les positions P(5) à P(32), ce qui permet d'avoir une phase préparatoire plus rapide.

En outre l'invention concerne aussi le cas où le format global est confondu avec le format élémentaire, le mot à traiter est alors contenu dans un seul registre.

La rotation des deux demi-clés peut s'écrire alors en utilisant la notation en usage pour le type de microprocesseur précité, de la manière suivant pour les rotations à gauche. Le nombre de rotations à effectuer est fixé par le contenu du registre A :

```
"enc1" BRSET 4, K4 "enc2"
"enc2" ROL      K7
       ROL      K6
       ROL      K5
       ROL      K4
       BRSET 4, K0 "enc3"
```

```
"enc3" ROL      K3
       ROL      K2
       ROL      K1
       ROL      K0
       DECA              on diminue d'une unité le contenu
                         du registre A
       BNE      "enc1"
       RTS
```

pour les rotations à droite dont le nombre est aussi fixé par le contenu du registre A :

```
"dec1"  BRSET  3    K3  "dec2"
"dec2"  ROR         K0
        ROR         K1
        ROR         K2
        ROR         K3
        BRSET  3    K7  "dec3"
"dec3"  ROR         K4
        ROR         K5
        ROR         K6
        ROR         K7
        DECA
        BNE             "dec1"
        RTS
```

Selon une caractéristique importante de l'invention, la phase préparatoire peut être combinée avec la première permutation effectuée sur les clés ; on pourra se reporter à la page 59 et notamment au tableau 3 de l'ouvrage précédemment cité comme deuxième référence.

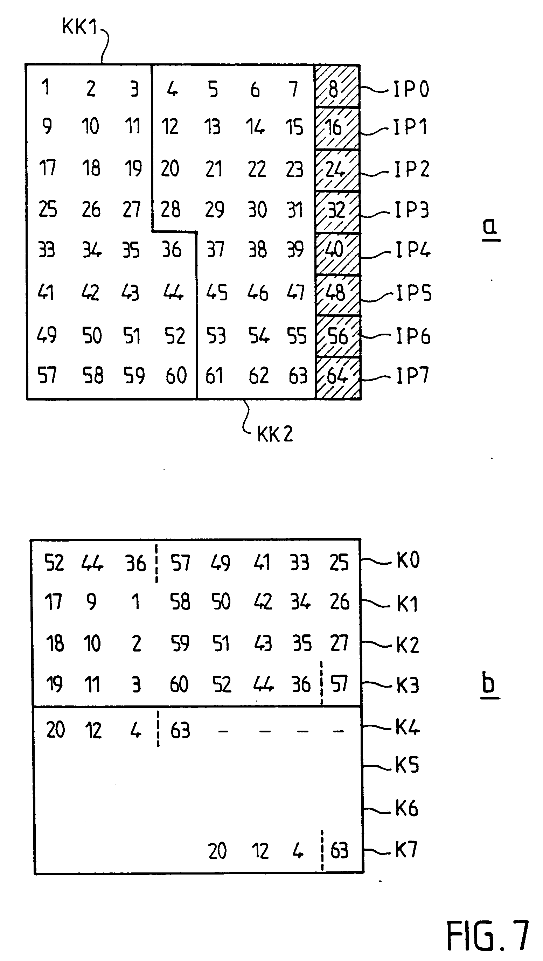

Les deux demi-clés sont entrées dans des registres IP0 à IP7 comme indiqué à la figure 7 en a.

Les chiffres progressant de gauche à droite et de haut en bas donnent l'ordre initial des éléments binaires composant les deux demi-clés KK1 et KK2. Les zones hachurées représentent les éléments binaires à supprimer.

En b à la figure 7 on représente les deux demi-clés KK1P et KK2P qui ont subi la permutation et sont préparées comme précédemment, seule la permutation de la clé KK1 est montrée en détail.

On donne ci-dessous les instructions concernant cette phase préparatoire préférée.

4) Phase préparatoire préférée combinée avec une permutation

```
                                              Commentaires
"pc1"   LDX     #7
        STX     R1
"pc11"  LDX     R1
        LDA     IP      X   la concaténation de IP avec le
                            contenu de X donne la référence du
                            registre IP0 à IP7
        LDX     #7
"pc12"  LSRA
        ROL     K       X   la concaténation de K avec (X)
                            donne la référence de l'un des re-
                            gistres K0 à K7
        DECX
        BPL     "pc12"      on revient à l'étiquette "pc12" 7
                            fois
        DEC     R1
        BPL     "pc11"      et on revient aussi 7 fois à
                            l'étiquette "pc11".
        LDA     K4
        LDX     K6
        STX     K4
        STA     K6
        LDX     K3
        LSLX

        LSLX
        LSLX
        LSLX
        STX     K7


    LDA     #4
    BSR     "dec1"      on exécute la rotation droite dé-
                        finie ci-dessus.
    LDA     #3
    BSI     "enc1"      on exécute la rotation gauche dé-
                        finie ci-dessus.
    RTS
```

Ainsi on se rend compte que la rotation conforme à l'invention est pleinement utilisée dans les procédures de cryptage/décryptage mises en oeuvre à l'intérieur de la carte à microcircuit.

**Revendications**

1. Procédé de rotation d'un mot constitué de "p" éléments binaires ($b_0$ à $b_{p-1}$) disposé depuis une position P(i) jusqu'à une position P(i+p-1) dans un format global prévu pour contenir (p+n) éléments binaires disposés selon les positions P(1) à P(p+n), format global constitué de k format(s) élémentaire(s) FE(j), (j = 1... k) formé(s) de x éléments binaires tels que kx = p+n, procédé caractérisé en ce qu'il est effectué au moyen d'un microprocesseur disposant d'une instruction du type test d'un élément binaire dans le format élémentaire, instruction par laquelle la valeur dudit élément binaire testé est transférée. dans un registre de report, en ce qu'il implique une phase de préparation qui consiste :
   - à recopier dans les positions P(1) à P(i-1) les éléments binaires disposés dans les positions P(p+1) à P(i+p-1) et dans les positions P(i+p) à P(p+n) les éléments binaires disposés dans les positions P(i) à P(n) si 0<i-1<n,
   - à recopier dans les positions P(1) à P(n) les éléments binaires disposés dans les positions P(p+1) à P(p+n) si i-1 = n,
   - à recopier dans les positions P(p+1) à P(p+n) les éléments binaires disposés dans les positions P(1) à P(n) si i = 1,

   et en ce que la phase de rotation proprement dite consiste :
   - à transférer dans le registre de report au moyen de ladite instruction de type test l'élément binaire situé à la position P(n+1) pour une rotation dans un premier sens et à effectuer successivement une rotation dans ce premier sens de chacun des formats élémentaires FE(k), FE(k-1),... FE(1), ou
   - à transférer dans le registre de report au moyen de ladite instruction de type test l'élément binaire situé à la position P(p+n-i+1) pour une rotation dans un second sens différent du premier et à effectuer successivement une rotation dans ce second sens de chacun des formats élémentaires FE(1), FE(2), ... FE(k).

2. Procédé de rotation selon la revendication 1 destiné à être combiné avec un procédé de cryptage/décryptage comportant une étape de permutation, caractérisé en ce que la phase de préparation est combinée avec l'étape de permutation.

3. Dispositif pour effectuer la rotation d'un mot constitué de "p" éléments binaires ($b_0$ à $b_{p-1}$) disposé depuis une position P(i) jusqu'a une position P(i+p-1) dans un format global prévu pour contenir (p+n) éléments binaires disposés selon les positions P(1) à P(p+n), format global étant constitué de k format(s) élémentaire(s) FE(j), (j = 1... k) formé(s) de x éléments binaires tels que kx = p+n, et qui comporte un ensemble de registres pour le format global formé d'au moins un registre au format élémentaire, un microprocesseur pour exécuter au moins des instructions de rotation droite, de rotation gauche et une instruction du type test d'élément binaire d'un format élémentaire par laquelle la valeur dudit élément binaire testé est transferé dans un registre de report, et une mémoire morte pour contenir des instructions nécessaires pour la mise en oeuvre dudit procédé selon l'une des revendications 1 et 2, ledit dispositif étant caractérisé en ce que ledit microprocesseur effectue une phase de préparation qui consiste:
   - à recopier dans les positions P(1) à P(i-1) les éléments binaires disposés dans les positions P(p+1) à P(i+p-1) et dans les positions P(i+p) à P(p+n) les éléments binaires disposés dans les positions P(i) à P(n) si 0<i-1<n,
   - à recopier dans les positions P(1) à P(n) les éléments binaires disposés dans les positions P(p+1) à P(p+n) si i-1 = n,
   - à recopier dans les positions P(p+1) à P(p+n) les éléments binaires disposés dans les positions P(1) à P(n) si i = 1, et en ce que ledit microprocesseur effectue la phase de rotation proprement dite qui consiste, pour une rotation dans un premier sens, à transférer dans le registre de report au moyen de ladite instruction de type test l'élément binaire situé à la position P(n+1) et à effectuer successivement une rotation dans ledit premier sens de chacun des formats élémentaires FE(k), FE(k-1),... FE(1), ou, pour une rotation dans un second sens différent du premier, à transférer dans le registre de report au moyen de ladite instruction de type test l'élément binaire situé à la position P(p+n-i+1) et à effectuer successivement une rotation dans ledit second sens de chacun des formats élémentaires FE(1), FE(2), ... FE(k).

**Patentansprüche**

1. Verfahren zur Rotation eines Wortes, das aus "p" von einer Position P(i) bis zu einer Position P(i+p-1) angeordneten Binärelementen ($b_0$ bis $b_{p-1}$) zusammengesetzt ist, in einem globalen Format, das dazu vorgesehen ist, (p+n) Binärelemente zu enthalten, die entsprechend den Positionen P(1) bis P(p+n) angeordnet sind, wobei das globale Format aus einem oder k, von x Binärelementen gebildeten Elementarformat(en) FE(j), (j = 1 ... k) so zusammengesetzt ist, daß kx = p+n, <u>dadurch gekennzeichnet</u> ist, daß es mittels eines Mikroprozessors durchgeführt wird, der über eine Anweisung des Typs Abfrage eines binären Elements im Elementarformat verfügt, wobei diese Anweisung den Wert des genannten abgefragten Binärelementes in ein Übertragsregister überträgt, und daß es eine Vorbereitungsphase umfaßt, die darin besteht:
   - daß in die Positionen P(1) bis P(i-1) die in den Positionen P(p+1) bis P(i+p-1) befindlichen Elemente kopiert werden und in die Positionen P(i+p) bis P(p+n) die in den Positionen P(i) bis P(n) befindlichen Binärelemente kopiert werden, falls 0<i-1<n,
   - daß in die Positionen P(1) bis P(n) die in den Positionen P(p+1) bis P(p+n) befindlichen Binärelemente kopiert werden, falls i-1 = n,
   - daß in die Positionen P(p+1) bis P(p+n) die in den Positionen P(1) bis P(n) befindlichen Binärelemente kopiert werden, falls i = 1,
   und dadurch, daß die eigentliche Rotationsphase darin besteht:
   - daß das in der Position P(n+1) befindliche Binärelement in das Übertragsregister mittels der genannten Anweisung des Abfrage-Typs zur Rotation in einer ersten Richtung und zur Durchführung einer aufeinanderfolgenden Rotation jedes der Elementarformate FE(k), FE(k-1), ... FE(1) in dieser ersten Richtung übertragen wird,
   - daß das in der Position P(p+n-i+1) befindliche Binärelement in das Übertragsregister mittels der genannten Anweisung des Abfrage-Typs zur Rotation in einer zweiten von der ersten verschiedenen Richtung und zur Durchführung einer aufeinanderfolgenden Rotation jedes der Elementarformate FE(1), FE(2), ... FE(k) in dieser zweiten Richtung übertragen wird.

2. Zur Kombination mit einem Codier/Decodierverfahren bestimmtes Rotationsverfahren nach Anspruch 1, das einen Vertauschungsschritt enthält, <u>dadurch gekennzeichnet</u>, daß die Vorbereitungsphase mit der Vertauschungsphase kombiniert wird.

3. Vorrichtung zur Durchführung der Rotation eines Wortes, das aus "p" von einer Position P(i) bis zu einer Position P(i+p-1) angeordneten Binärelementen ($b_0$ bis $b_{p-1}$) zusammengesetzt ist, in einem globalen Format, das dazu vorgesehen ist, (p+n) Binärelemente zu enthalten, die entsprechend den Positionen P(1) bis P(p+n) angeordnet sind, wobei das globale Format aus einem oder k, von x Binärelementen gebildeten Elementarformat(en) FE(j), (j = 1 ... k) so zusammengesetzt ist, daß kx = p+n, und welche Vorrichtung eine Gesamtheit von Registern für das aus wenigstens aus einem Register im Elementarforamt gebildete Globalformat umfaßt, einen Mikroprozessor, um wenigstens die Anweisungen zur Rotation nach rechts, zur Rotation nach links und eine Anweisung des Typs Abfrage eines Binärelements im Elementarformat, durch die der Wert des genannten Binärelementes in ein Übertragsregister übertragen wird, auszuführen, einen Nur-Lese-Speicher umfaßt, um die für die Ausführung des genannten Verfahrens nach einem der Ansprüche 1 und 2 notwendigen Anweisungen zu enthalten, wobei die genannte Vorrichtung <u>dadurch gekennzeichnet</u> ist, daß der genannte Mikroprozessor eine Vorbereitungsphase durchführt, die darin besteht:
   - daß in die Positionen P(1) bis P(i-1) die in den Positionen P(p+1) bis P(i+p1) befindlichen Elemente kopiert werden und in die Positionen P(i+p) bis P(p+n) die in den Positionen P(i) bis P(n) befindlichen Binärelemente kopiert werden, falls 0<i-1<n,
   - daß in die Positionen P(1) bis P(n) die in den Positionen P(p+1) bis P(p+n) befindlichen Bnärelemente kopiert werden, falls i-1 = n,
   - daß in die Positionen P(p+1) bis P(p+n) die in den Positionen P(1) bis P(n) befindlichen Binärelemente kopiert werden, falls i = 1, und daß der genannte Mikroprozessor die eigentliche Rotationsphase durchführt, die darin besteht, daß das in der Position P(n+1) befindliche Binärelement in das Übertragsregister mittels der genannten Anweisung des Abfrage-Typs zur Rotation in einer ersten Richtung und zur Durchführung einer aufeinanderfolgenden Rotation jedes der Elementarformate FE(k), FE(k-1), ... FE(1) in dieser ersten Richtung übertragen wird, oder daß das in der Position P(p+n-i+1) befindliche Binärelement in das Übertragsregister mittels der genannten Anweisung des Abfrage-Typs zur Rotation in einer zweiten von der ersten verschiedenen Richtung und zur Durchführung einer aufeinanderfolgenden Rotation jedes der Elementarformate FE(1), FE(2), ... FE(k) in dieser zweiten Richtung übertragen wird.

## Claims

1. A method of rotating a word constituted by "p" binary elements ($b_0$ to $b_{p-1}$) arranged from a position P(i) to a position P(i+p-1) in a global format provided so as to contain (p+n) binary elements arranged according to the positions P(1) to P(p+n), which global format is constituted by k elementary format(s) FE(j), (j = 1 ... k), formed by x binary elements such as kx = p+n, characterized in that it is carried out by means of a microprocessor having an instruction of the type for testing a binary element in the elementary format, being an instruction whereby the value of said binary element is transferred to a carry register, in that it implies a preparation phase which consists of:
   - recopying in the positions P(1) to (Pi-1) the binary elements arranged in the positions P(p+1) to P(i+p-1) and in the positions P(i+p) to (P(p+n) the binary elements arranged in the positions P(i) to P(n) if O<i-1<n,
   - recopying in the positions P(1) to P(n) the binary elements arranged in the positions P(p+1) to P(p+n) if i-1 = n,
   - recopying in the positions P(p+1) to P(p+n) the binary elements arranged in the positions P(1) to P(n) if i = 1, and in that the actual phase of rotation consists of:
   - transferring to the carry register, by way of said carry instruction, the binary element situated in the position P(n+1) for a rotation in a first sense and carrying out successively a rotation in this first sense of all elementary formats FE(k), FE(k-1), ... FE(1),
   - transferring to the carry register, by way of said carry instruction, the binary element situated in the position P(p+n-i+1) for a rotation in a second sense and carrying out successively a rotation in said second sense of each elementary format FE(1), FE(2), ... FE(k).

2. A method of rotation as claimed in Claim 1, intended to be combined with an encryption/decryption method comprising a permutation step, characterized in that the preparation phase is combined with the permutation phase.

3. A device for carrying out the rotation of a word constituted by "p" binary elements ($b_0$ to $b_{p-1}$) arranged from a position P(i) to a position P(i+p-1) ion a global format provided so as to contain (p+n) binary elements arranged according to the positions P(1) to P(p+n), which global format is constituted by k elementary format(s) FE(j), (j = 1 ... k), formed by x binary elements such as kx = p+n, and comprising a group of registers for the global format which is formed by at least one register of the elementary format, a microprocessor for executing at lest the instructions for clockwise rotation, for counterclockwise rotation and a test-type instruction for the binary element of an elementary format whereby the value of said tested binary element is transferred to a carry register, and a read-only memory for storing the instructions necessary for carrying out the method claimed in one of the Claims 1 and 2, which device is characterized in that said microprocessor carries out a preparation phase which consists of:
   - recopying in the position P(1) to P(i-1) the binary elements arranged in the positions P(p+1) to P(i+p-1) and in the positions P(i+p) to P(p+n) the binary elements arranged in the positions P(i) to P(n) if 0<i-1<n,
   - recopying in the positions P(1) to P(n) the binary elements arranged in the positions P(p+1) to P(p+n) if i-1 = n,
   - recopying in the positions P(p+1) to P(p+n) the binary elements arranged in the positions P(1) to P(n) if i = 1, and in that said microprocessor carries out the actual phase of rotation which, for a rotation in a first sense, consists of transferring to the carry register, by way of said test-type instruction, the binary element situated in the position P(n+1) and of successively carrying out a rotation in this first sense of each of the elementary formats FE(k), FE(k-1), ... FE(1), or, for a rotation in a second sense which differs from the first sense, of transferring to the carry register, by way of said test-type instruction, the binary element situated in the position P(p+n-i+1) and of successively carrying out a rotation in this second sense of each of the elementary formats FE(1), FE(2), ... FE(k).

FIG. 1

FIG. 2

FIG. 3

FIG. 4

12

EP 0 410 515 B1

P(1) P(2) P(3) P(4) P(5) WI P(31) P(32)

a | b25 | b26 | b27 | b0 | b1 | b2 | b3 | | | b26 | b27 | b0 |

A3 — b1 C

b | | | | | | b21 | b22 | b23 | b24 | b25 | b26 | b27 | b0 |

FE(4)

b21

c | b13 | b14 | b15 | b16 | b17 | b18 | b19 | b20 | | b22 | b23 | b24 | b25 | b26 | b27 | b0 | b1 |

FE(3)

b13

d | b5 | b6 | b7 | b8 | b9 | b10 | b11 | b12 | | b14 | b15 | b16 | b17 | b18 | b19 | b20 | b21 |

FE(2)

b5

e | b25 | b26 | b27 | b0 | b1 | b2 | b3 | b4 | | b6 | b7 | b8 | b9 | b10 | b11 | b12 | b13 |

FE(1)

f | b26 | b27 | b0 | b1 | b2 | b3 | b4 | b5 | | b6 | b7 | b8 | b9 | b10 | b11 | b12 | b13 | | b14 | b15 | b16 | b17 | b18 | b19 | b20 | b21 | | b22 | b23 | b24 | b25 | b26 | b27 | b0 | b1 |

WO

FIG.5

EP 0 410 515 B1

FIG. 6

KK1

| | | | | | | | |
|---|---|---|---|---|---|---|---|
| 1 | 2 | 3 | 4 | 5 | 6 | 7 | 8 | ⎯ IP 0
| 9 | 10 | 11 | 12 | 13 | 14 | 15 | 16 | ⎯ IP 1
| 17 | 18 | 19 | 20 | 21 | 22 | 23 | 24 | ⎯ IP 2
| 25 | 26 | 27 | 28 | 29 | 30 | 31 | 32 | ⎯ IP 3
| 33 | 34 | 35 | 36 | 37 | 38 | 39 | 40 | ⎯ IP 4
| 41 | 42 | 43 | 44 | 45 | 46 | 47 | 48 | ⎯ IP 5
| 49 | 50 | 51 | 52 | 53 | 54 | 55 | 56 | ⎯ IP 6
| 57 | 58 | 59 | 60 | 61 | 62 | 63 | 64 | ⎯ IP 7

KK 2

a

| | | | | | | | |
|---|---|---|---|---|---|---|---|
| 52 | 44 | 36 | 57 | 49 | 41 | 33 | 25 | ⎯ K0
| 17 | 9 | 1 | 58 | 50 | 42 | 34 | 26 | ⎯ K1
| 18 | 10 | 2 | 59 | 51 | 43 | 35 | 27 | ⎯ K2
| 19 | 11 | 3 | 60 | 52 | 44 | 36 | 57 | ⎯ K3
| 20 | 12 | 4 | 63 | – | – | – | – | ⎯ K4
| | | | | | | | | ⎯ K5
| | | | | | | | | ⎯ K6
| | | | | 20 | 12 | 4 | 63 | ⎯ K7

b

# FIG. 7